Europäisches Patentamt

European Patent Office

Office européen des brevets

(11) Numéro de publication: **0 236 198 B1**

# (12) FASCICULE DE BREVET EUROPEEN

(45) Date de publication de fascicule du brevet:
04.09.91

(51) Int. Cl.⁵: **H04N 3/12**

(21) Numéro de dépôt: **87400315.5**

(22) Date de dépôt: **12.02.87**

(54) **Ecran d'affichage à matrice active permettant l'affichage de niveaux de gris.**

(30) Priorité: **17.02.86 FR 8602103**

(43) Date de publication de la demande:
**09.09.87 Bulletin 87/37**

(45) Mention de la délivrance du brevet:
**04.09.91 Bulletin 91/36**

(84) Etats contractants désignés:
**CH DE GB IT LI NL**

(56) Documents cités:
**EP-A- 0 051 521**
**DE-A- 3 212 863**
**GB-A- 2 149 181**

(73) Titulaire: **COMMISSARIAT A L'ENERGIE ATO-MIQUE Etablissement de Caractère Scientifique Technique et Industriel**
**31/33, rue de la Fédération**
**F-75015 Paris(FR)**

(72) Inventeur: **Clerc, Jean-Frédéric**
**7, rue Casimir Brenier**
**F-38120 Saint Egreve(FR)**

(74) Mandataire: **Mongrédien, André et al**
**c/o BREVATOME 25, rue de Ponthieu**
**F-75008 Paris(FR)**

**Description**

La présente invention a pour objet un écran d'affichage à matrice active permettant l'affichage de niveaux de gris.

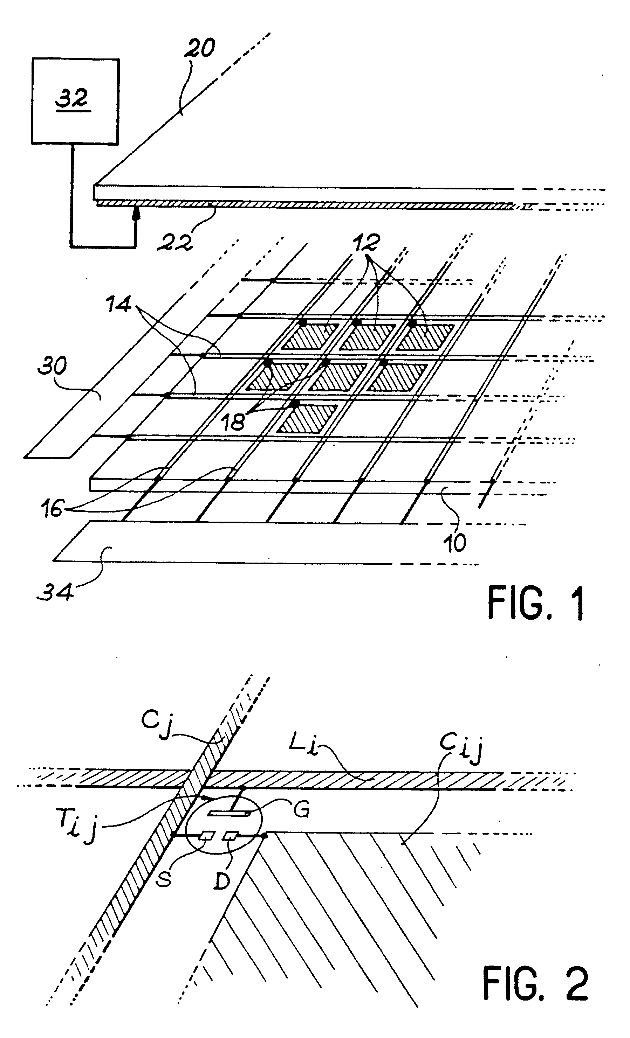

Un écran d'affichage à matrice active est représenté schématiquement sur la figure 1. Il comprend :

- une première paroi 10 sur laquelle sont déposés une matrice de N par P électrodes 12 formant des premières armatures de condensateurs, N lignes 14 et P colonnes 16 d'adressage, NP transistors de commande 18 ayant chacun un drain, une grille et une source, le drain de chaque transistor étant relié à l'armature 12 d'un des condensateurs, la source à l'une des colonnes 16 et la grille à l'une des lignes 14,
- une seconde paroi 20 sur laquelle est déposée une contre-électrode 22 formant la seconde armature des condensateurs,
- un premier circuit de commande lignes 30 apte à appliquer successivement aux N lignes 14 une tension $V_L$ apte à rendre passants les transistors de ohaque ligne pendant une durée $T_L$, la commande des N lignes constituant une trame de durée $Tr = NT_L$,
- un deuxième circuit de commande 32 apte à appliquer à la contre-électrode 22 une tension Vce prenant successivement deux valeurs, une valeur 0 et une valeur Vc, la tension Vce passant de l'une à l'autre de ces valeurs, soit après chaque trame, soit après chaque ligne, et
- un troisième circuit de commande colonnes 34 apte à appliquer sur les colonnes 16, pendant toute la durée de commande d'une ligne, un jeu de P tensions.

La figure 2 montre un détail d'un point d'affichage. On y voit une ligne d'adressage Li, une colonne d'adressage Cj, un transistor Tij ayant une grille G, une source S et un drain D, et enfin un pavé conducteur Cij. La source S est reliée à la colonne Cj, la grille G à la ligne Li et le drain D au pavé Cij.

Pour commander un point d'affichage correspondant à l'armature Cij, on ouvre le transistor Tij pendant une durée $T_L$. Une différence de potentiel entre la colonne Cj liée à la source S de Tij et la contre électrode 22, provoque un écoulement de charges dans le canal du transistor. Ces charges se stockent sur le drain D, c'est-à-dire finalement sur l'armature Cij et, symétriquement, sur la contre-électrode. Après le temps d'adressage ligne, le transistor Tij est rendu bloquant. La charge Qij emmagasinée dans le condensateur y reste et une tension Vij se trouve appliquée en permanence au matériau d'affichage, c'est-à-dire, en pratique, au cristal liquide. Cette tension est égale à

$$\frac{Qij}{Kij}$$

si Kij désigne la capacité du point d'affichage.

Si l'on veut afficher un niveau de gris, il faut donner à ce rapport une valeur comprise entre 0 et une valeur Vmax qui correspond à un état saturé (blanc).

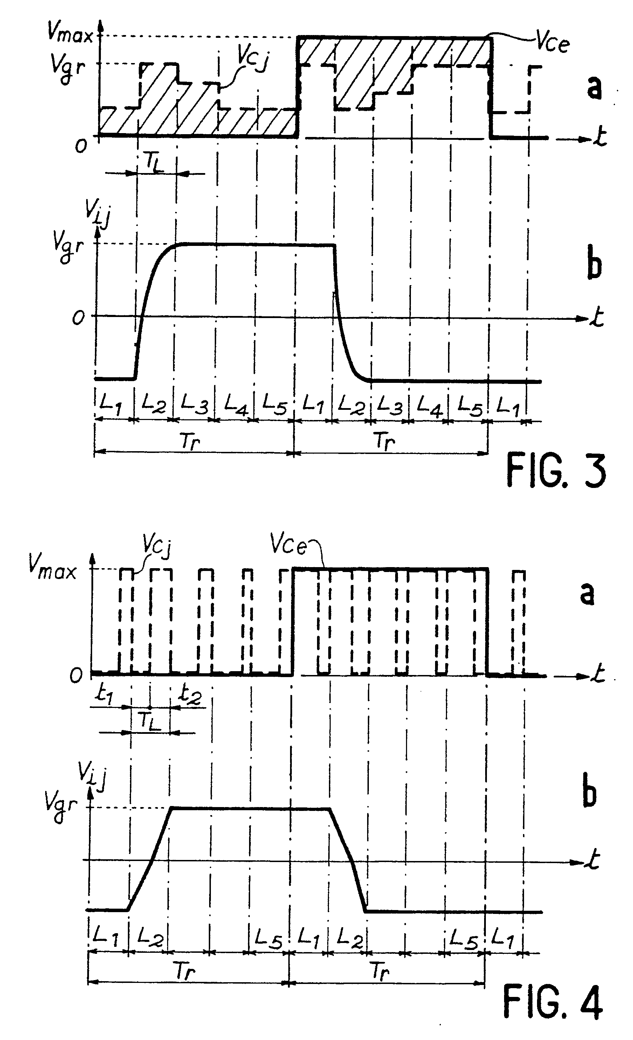

Deux solutions sont connues dans l'art antérieur pour afficher de tels niveaux gris. La première est illustrée sur la figure 3. Sur cette figure, ainsi d'ailleurs que sur les suivantes, le temps est découpé en intervalles d'adressage ligne, de durée $T_L$ et l'on suppose, pour simplifier que l'écran contient 5 lignes $L_1$, $L_2$, ...$L_5$. Le balayage de ces 5 lignes constitue une première trame et le balayage des 5 lignes suivantes une deuxième trame.

La partie a de la figure 3 montre la tension Vcj appliquée à une colonne quelconque de rang j. Cette tension est représentée en tirets. La figure montre aussi la tension VCe appliquée à la contre-électrode (en trait continu). Cette dernière est nulle pendant la première trame puis égale à Vmax pendant la seconde. La tension appliquée à une colonne varie entre 0 et Vmax suivant une échelle de tensions. La tension résultante appliquée au point d'affichage située sur la colonne j est égale à la différence VCj-Vce. C'est ce qui correspond à la zone hachurée. On voit que cette tension a une valeur moyenne nulle du fait de l'alternance à chaque trame (pour éviter les phénomènes d'accumulation de charges qui risqueraient d'endommager le cristal liquide). Quant à la tension Vij apparaissant sur un point d'affichage déterminé, par exemple sur la 2^ème ligne et la j^ème colonne, elle varie comme représenté sur la partie b. Pendant l'intervalle où la deuxième ligne est adressée, la tension croît jusqu'a une valeur Vgr ; puis lorsque la ligne n'est plus adressée, la tension demeure à cette valeur. L'avantage de cette méthode est, qu'en utilisant des transistors assez conducteurs, à la fin du temps d'adressage ligne, la tension Vij atteint le ni veau Vgr correspondant au gris à afficher, et que cette tension ne dépend pas de la valeur du courant de drain du transistor. Les gris seront alors reproduits sur l'écran avec le même niveau de brillance pour tous les points. En revanche, l'inconvénient de cette méthode est qu'elle nécessite d'engendrer un grand nombre de tensions Vgr (autant que de niveaux de gris désirés), ce qui rend le circuit de commande très complexe.

Le document DE-A-3 212 863 décrit la structure générale d'un écran d'affichage à cristal liquide de ce type et le document GB-A-2 070 308 décrit un mode de réalisation d'un circuit permettant de délivrer 8 tensions différentes.

Il existe une autre technique de commande d'affichage de gris. Elle est illustrée sur la figure 4. Sur la partie a on voit, en trait plein, la tension Vce appliquée à la contre-électrode et en tirets la la tension VCj appliquée à une colonne de rang j pendant les divers intervalles de commande des lignes. On voit que le temps d'affichage d'un point est divisé en deux intervalles : le premier, de durée $t_1$, pendant lequel la colonne est portée au même potentiel que la contre-électrode, le second pendant lequel elle est portée à une tension Vmax. En outre on utilise des transistors à conduction limitée de façon à ce que la tension Vij (représentée sur la partie b) n'atteigne pas la valeur maximum Vmax si l'intervalle $t_2$ est inférieur à l'intervalle total d'adressage d'une ligne $T_L$.

L'avantage de cette seconde solution, par rapport à la précédente, est qu'elle ne nécessite que deux niveaux de tension pour la commande des lignes : 0 et Vmax. Son inconvénient est que la tension finalement atteinte dépend du courant de drain du transistor commandé. Or, ce courant est en fait difficile à contrôler, pour des raisons technologiques, de sorte que la reproduction sur un écran, d'une même brillance en divers points, pour un même niveau de gris, est difficile à obtenir.

L'invention a justement pour objet de rendre l'effet visuel pas ou peu dépendant des dispersions des caractéristiques présentées par les transistors, tout en conduisant à des circuits de commande très simples. A cette fin, l'invention préconise l'emploi d'un circuit qui délivre une tension unique présentant un palier et une rampe (et non plus une échelle de tensions comme dans la première méthode de l'art antérieur, ou deux comme dans la seconde), cette tension étant appliquée à des circuits de commande de colonnes qui la transmettent pendant une durée qui peut prendre plusieurs valeurs discrètes. Ces circuits de commande peuvent être obtenus très simplement, par exemple au moyen d'un transistor unique. Avec la solution de l'invention, les niveaux affichés ne sont pas sensibles aux dispersions des caractéristiques des transistors car la tension appliquée au matériau d'affichage est rendue indépendante du courant de drain des transistors. Cette propriété est intéressante notamment pour les panneaux de grandes dimensions, puisqu'elle permet une dispersion des caractéristiques des transistors entre par exemple le centre de l'écran et sa périphérie. Elle accroît donc les tolérances de fabrication des écrans de grande surface.

De façon plus précise, la présente invention a pour objet un écran d'affichage du genre de ceux qui ont été décrits plus haut en liaison avec la figure 1, cet écran étant caractérisé par le fait que le troisième circuit de commande colonnes comprend :

- un circuit délivrant une tension Vcb présentant, pendant une durée $t_1$, une valeur égale à la tension Vce appliquée à la contre-électrode et pendant une durée $t_2$ une tension en forme de rampe variant linéairement entre cette tension Vce et une tension qui diffère de Vce d'une quantité Vc, la durée totale $t_1 + t_2$ de la tension Vcb étant égale à la durée $T_L$ de commande d'une ligne,

- des circuits de commande de colonnes connectés entre ledit circuit et chaque colonne et qui transmettent à chaque colonne ladite tension Scb pendant une durée pouvant prendre une série de valeurs discrètes entre $t_1$, auquel cas on obtient un affichage noir et $T_L$, auquel cas on obtient un affichage blanc, chaque valeur discrète intermédiaire comprise entre $t_1$ et $T_L$ correspondant à un affichage de gris.

De préférence, les circuits de commande de colonnes connectés entre le circuit engendrant Vcb et chaque colonne sont constitués par P transistors ayant une source reliée au circuit délivrant la tension Vcb, un drain relié à l'une des P colonnes et une grille reliée à un moyen apte à délivrer une tension de commande d'ouverture du transistor pendant une durée qui est fonction du niveau de gris à afficher.

De préférence encore, le moyen apte à délivrer une tension de commande d'ouverture des P transistors est constitué par P registres à décalage de n cellules chacun, la première cellule de chaque registre étant reliée à la grille d'un des transistors, un registre contenant n éléments binaires dont le premier est toujours égal à 1 et les suivants égaux à 0 ou à 1, l'ensemble de ces n éléments binaires caractérisant un niveau de gris : ces registres sont commandés par une horloge commune de période $t_1$, qui commande le décalage des éléments binaires dans chaque registre ; la durée $t_1$ est telle que $nt_1$ soit égal à la durée totale $T_L$ de commande d'une ligne.

De toutes façons, les caractéristiques et avantages de l'invention apparaîtront mieux à la lecture de la description qui suit d'exemples de réalisation donnés à titre explicatif mais nullement limitatif. Cette description se réfère à des dessins annexés sur lesquels :

- la figure 1, déjà décrite, représente un écran selon l'art antérieur,

- la figure 2, déjà décrite, montre un détail d'un tel écran,

- la figure 3, déjà décrite, montre une première variante connue de commande de niveaux de gris,

- la figure 4, déjà décrite, montre une seconde variante connue de commande de niveaux de gris,

- la figure 5 montre un exemple de commande des transistors d'une même ligne,
- la figure 6 montre la forme de la tension unique engendrée selon l'invention,
- la figure 7 montre les tensions appliquées pour obtenir un niveau de blanc,
- la figure 8 montre la tension appliquée au point d'affichage et l'état des circuits de commande dans le cas de la commande de blanc,
- la figure 9 montre la tension appliquée dans le cas d'un affichage de noir,
- la figure 10 montre l'évolution de la tension appliquée à un point d'affichage pour un niveau de gris donné et l'état des circuits de commande correspondants,
- la figure 11 montre un exemple d'écriture d'un niveau de blanc suivie de l'écriture d'un niveau de noir,
- la figure 12 montre un exemple de réalisation des circuits de commande des colonnes selon l'invention, à l'aide de transistors,
- la figure 13 montre la tension en forme de rampe appliquée aux sources de tous les transistors, et les impulsions d'horloge commandant les registres à décalage,
- la figure 14 illustre une variante correspondant au cas d'une alternance après chaque ligne et non plus après chaque trame.

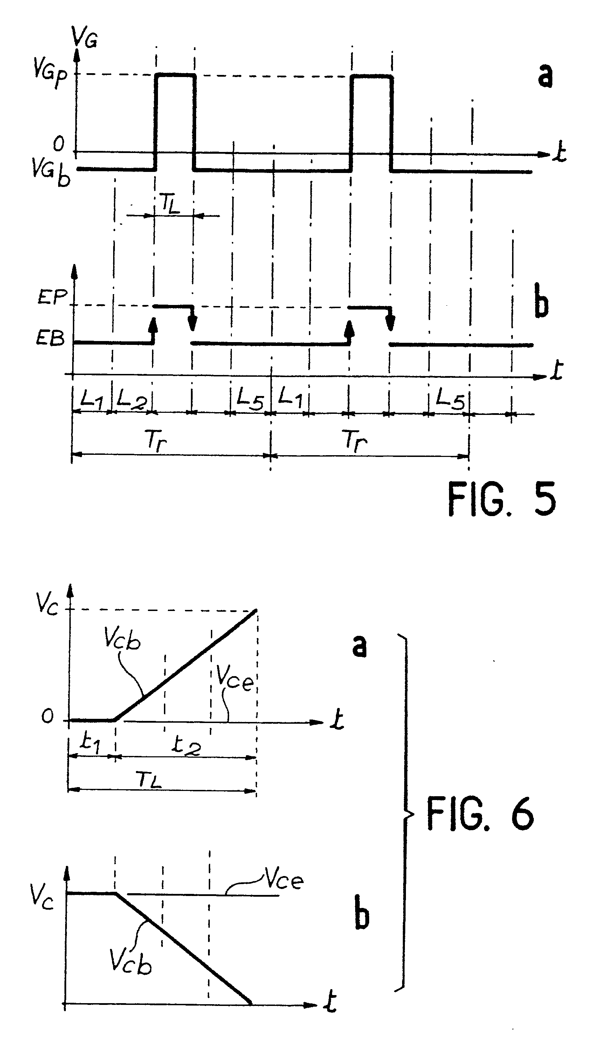

Sur la figure 5 on a représenté, sur la partie a, la tension VG appliquée à une ligne particulière (par exemple la troisième), c'est-à-dire, en définitive, la tension appliquée aux grilles des transistors connectés à cette ligne. Cette tension est égale soit à VGb, qui correspond à un état bloquant du transistor, soit à VGp qui correspond à un état passant dudit transistor. Sur la partie b de la figure, l'état passant est noté EP et l'état bloquant EB. Les flèches verticales montrent le passage des transistors d'un état à l'autre.

On observera que ce mode d'adressage n'est pas propre à l'invention mais qu'il est déjà utilisé dans l'art antérieur.

Ce qui, en revanche, est spécifique à l'invention, c'est la tension unique engendrée pour commander l'affichage. Cette tension unique est représentée sur la figure 6. Les deux formes a et b correspondent aux deux cas d'une trame paire et d'une trame impaire, si l'on alterne la tension de la contre-électrode Vce après chaque trame, ou d'une ligne paire et d'une ligne impaire, si l'on alterne Vce après chaque ligne. La tension unique notée Vcb est formée d'un palier de durée $t_1$ présentant une valeur égale à la tension de la contre-électrode Vce (c'est-à-dire 0 dans les cas a et Vc dans le cas b) et d'une rampe linéaire de durée $t_2$ faisant passer la tension de la valeur précédente à une valeur qui diffère de Vce d'une quantité Vc (c'est-à-dire qui atteint Vc dans le cas a et 0 dans le cas b). La durée totale $t_1 + t_2$ est égale à la durée $T_L$ de commande d'une ligne.

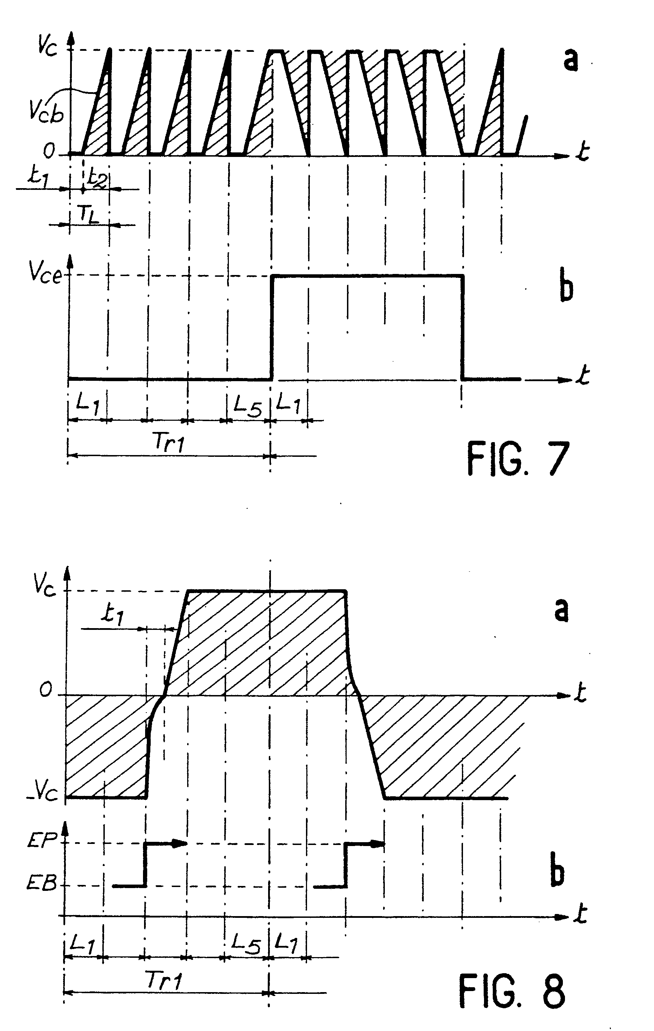

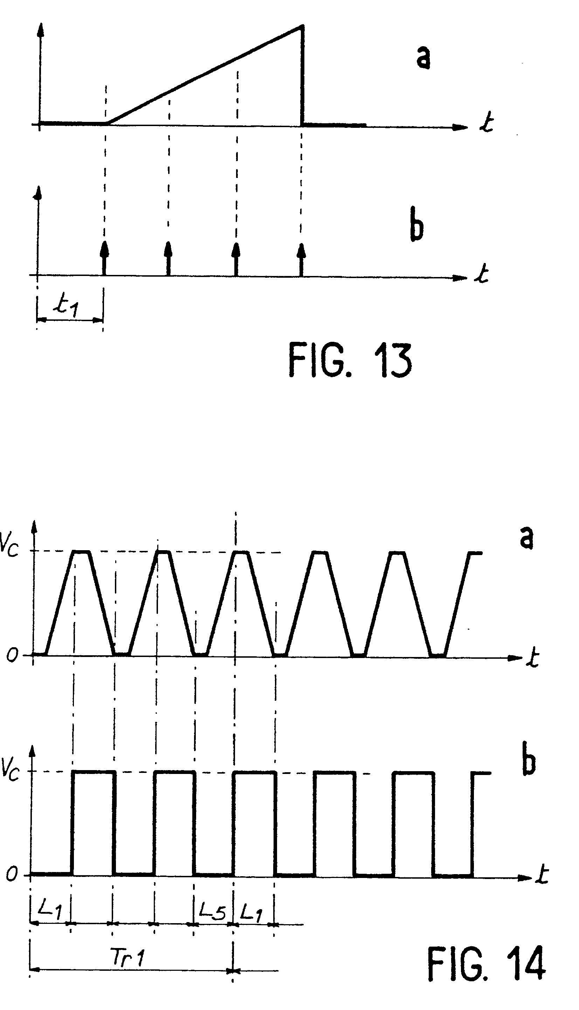

Dans les figures 7 à 11 qui vont être décrites on a supposé que l'alternance de polarité s'effectue après chaque trame. Sur la figure 14 on illustrera le cas ou l'alternance s'effectue après chaque ligne.

La figure 7 montre sur la partie a la tension unique Vcb au cours des divers balayages lignes (on suppose toujours qu'une trame est formée de 5 balayages lignes) et sur la partie b la tension de contre-électrode Vce et son alternance à chaque trame. Ainsi, la rampe de la tension Vcb a une pente positive pour une trame (ce qui correspond au signal de la figure 6a) et une pente négative pour la trame suivante (ce qui correspond au signal de la figure 6b).

Si l'on considère maintenant une colonne particulière, il faut déterminer l'intervalle pendant lequel on appliquera cette tension unique à la colonne. Cette durée est déterminée par des circuits de commande qui comme, on le verra plus tard, peuvent être des transistors mis dans un état passant ou bloquant. Sur les figures 8 à 11, ces états sont représentés sur la partie b des figures avec un état passant noté EP et un état bloquant noté EB.

Sur la figure 8, on s'intéresse à un point situé sur la troisième ligne et sur une colonne quelconque. On suppose que le blanc doit être affiché sur ce point. Le circuit de commande de la colonne doit donc être passant pendant toute la durée $T_L$. Pendant le palier de durée $t_1$, le circuit de commande est passant, le condensateur se décharge et la tension tombe à 0 ; puis le circuit de commande restant passant, la tension suit la rampe pour atteindre +Vc ou -Vc et ainsi de suite. On obtient ainsi un affichage blanc.

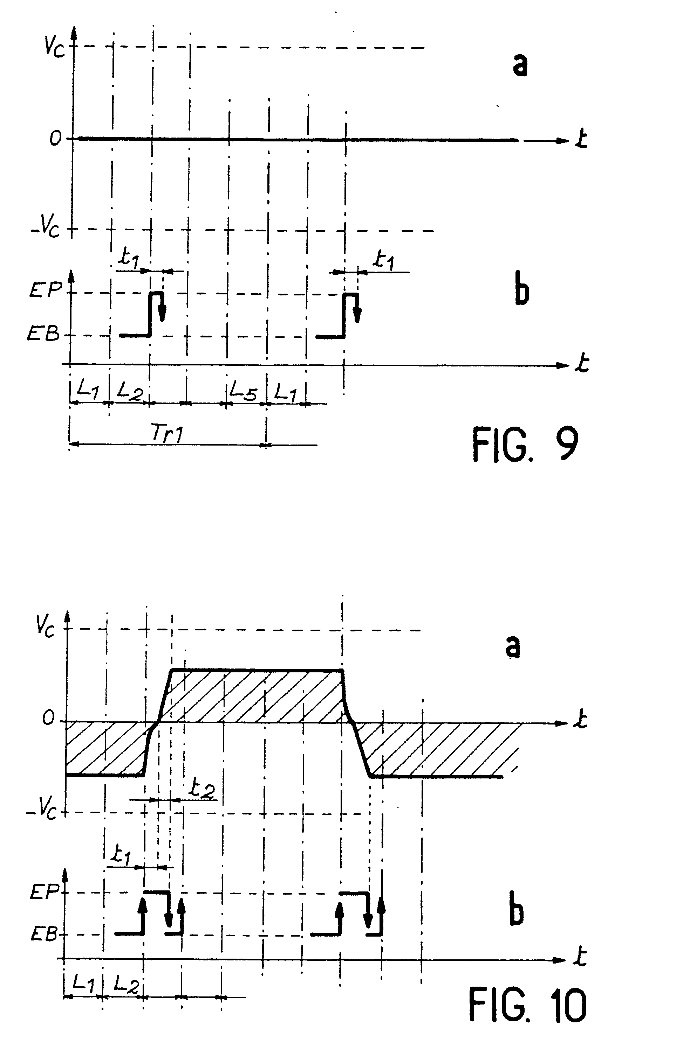

La figure 9 correspond à l'affichage d'un point noir. Le circuit de commande n'est passant que pendant l'intervalle de durée $t_1$, c'est-à-dire quand Vcb est égal à Vce. Autrement dit, aucune différence de potentiel n'est appliquée entre les armatures du condensateur situé à l'intersection de la colonne considérée et de la troisième ligne.

La figure 10 illustre un cas intermédiaire où l'on souhaite afficher un niveau de gris. Dans ce cas, le circuit de commande de la colonne est ouvert non seulement pendant le palier de durée $t_1$ (mais encore pendant une durée $t_2$ correspondant à la rampe de tension. Cette valeur $t_2$ est toutefois limitée et n'atteint pas la valeur $T_L - t_1$ comme dans le cas d'affichage de blanc. La tension appliquée commence donc par tomber à une valeur nulle (ce qui correspond au palier $t_1$) puis suit une partie de la rampe du signal Vcb (ce qui correspond à l'intervalle $t_2$). Ce niveau de tension intermédiaire atteint correspond à un niveau de gris.

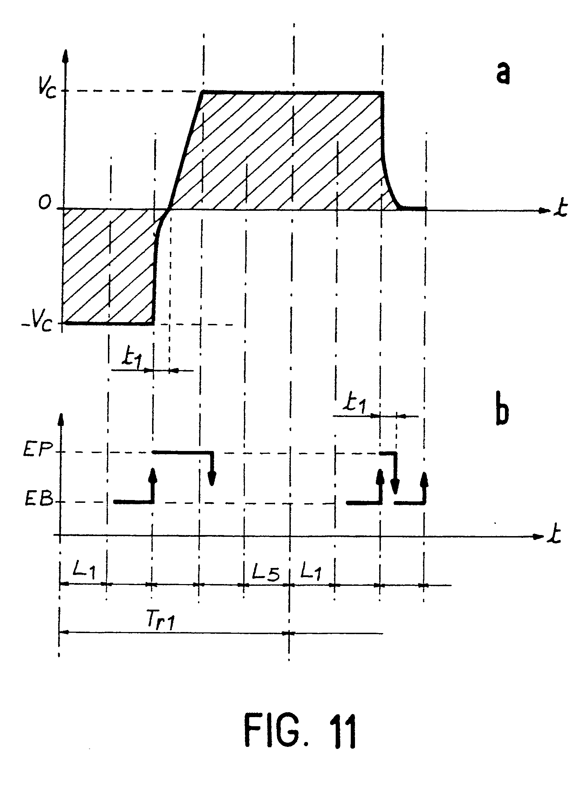

La figure 11 montre comment l'on passe d'un affichage de blanc à un affichage de noir. Sur la première trame, le circuit de commande de la colonne est passant pendant toute la durée d'adressage de la ligne. La tension appliquée atteint donc, en fin de balayage ligne, la tension Vc correspondant au blanc. A la trame suivante, le circuit de commande est passant pendant la durée $t_1$, ce qui correspond au palier où la tension appliquée est nulle, ce qui provoque la décharge du condensateur ; mais ce circuit est bloquant tout de suite après, ce qui empêche la tension de quitter la valeur 0. Le point affiché reste donc au niveau noir.

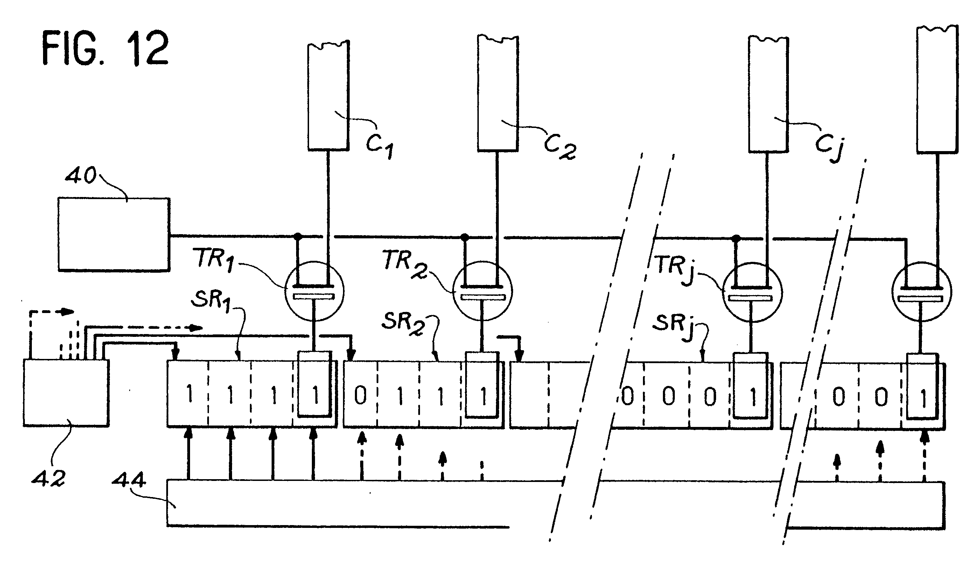

La figure 12 montre un exemple de réalisation des circuits de commande colonnes. Ces circuits sont constitués par des transistors TR1, TR2, ... TRj ayant une source reliée à un circuit 40 qui délivre la tension unique telle qu'illustrée sur la figure 6, et un drain relié à une colonne. Pour commander l'ouverture et la fermeture de ces transistors, on peut utiliser des registres à décalage SR1, SR2, ... SRj dont la première cellule est reliée à la grille de chacun des transistors TR1, TR2, ... TRj. Tous ces registres sont commandés par une horloge unique 42. Cette horloge émet des impulsions périodiques séparées par un intervalle de temps égal à $t_1$. La figure 13 représente justement la tension délivrée par le circuit 40 (a) et les impulsions d'horloge (b).

Les registres à décalage comprennent, dans le cas illustré, 4 cellules, car la durée $T_L$ est égale à $4t_1$. Les cellules sont chargées par des 1 ou par des 0 selon l'affichage à réaliser. Mais de toute manière, la première cellule est chargée par un 1. Aussi les transistors TRj sont-ils toujours passants pendant la durée $t_1$. Pour afficher un niveau de blanc, le registre est chargé par la suite 1111. Ainsi le transistor correspondant est-il ouvert sur la totalité du palier et de la rampe après les 4 impulsions d'horloge (ce qui correspond à l'exemple illustré par la figure 8). Pour afficher un gris clair, on chargera le registre par la suite 0111, ce qui correspond à un intervalle $t_2$ ouvert pendant $2t_1$ (ce qui correspond à l'exemple illustré sur la figure 10). Pour un gris foncé, on utilisera la suite 0011 et pour le noir la suite 0001. Ainsi, pour ce dernier cas, le transistor ne sera ouvert que pendant le palier $t_1$ (ce qui correspond à l'exemple illustré par la figure 9).

Le circuit 44 sert à charger les registres à décalage en fonction de l'affichage à réaliser sur les diverses colonnes. Chaque valeur est codée selon l'une des quatre suites mentionnées plus haut et le chargement s'effectue à chaque commande de ligne.

Quant au circuit 40 délivrant le signal unique de la figure 6, il peut être composé d'un générateur de signaux triangulaires asservi à la fréquence ligne du signal de synchronisation (vidéo par exemple).

Dans les modes de réalisation qui viennent d'être décrits, l'alternance de polarité de la tension de commande s'effectue après chaque trame. On peut aussi effectuer cette alternance après chaque ligne. C'est ce qui est illustré sur la figure 14 où la partie a montre le signal appliqué à l'entrée de tous les circuits de commande de colonnes et la partie b la tension appliquée à la contre-électrode.

**Revendications**

1. Ecran d'affichage à matrice active comprenant :

   - une première paroi (10) sur laquelle sont déposés : une matrice de N par P électrodes (12) formant des premières armatures de condensateurs, N lignes (14) et P colonnes (16) d'adressage, NP transistors de commande (18) ayant chacun un drain (D), une grille (G) et une source (S), le drain (D) de chaque transistor étant relié à l'armature (12) d'un des condensateurs, la source (S) à l'une des colonnes (16) et la grille (G) à l'une des lignes (14),

   - une seconde paroi (20) sur laquelle est déposée une contre-électrode (22) formant la seconde armature des condensateurs,

   - un premier circuit de commande lignes (30) apte à appliquer successivement sur les N lignes (14) une tension Ve apte à rendre passants les transistors (18) de chaque ligne pendant une durée $T_L$, la commande des N lignes constituant une trame de durée $Tr = NT_L$,

   - un deuxième circuit de commande (32) apte à appliquer sur la contre-électrode (22) une tension Vce prenant successivement deux valeurs, une valeur 0 et une valeur Vc, la tension Vce passant de l'une à l'autre de ces valeurs, soit après chaque trame, soit après chaque ligne, et

   - un troisième circuit de commande colonnes (34) apte à appliquer sur les P colonnes, pendant toute la durée de commande d'une ligne, un jeu de P tensions, cet écran étant caractérisé par le fait que le troisième circuit de commande colonnes (34) comprend :

   - un circuit (40) délivrant une tension Vcb présentant un palier de durée $t_1$ de valeur égale à la tension Vce appliquée à la contre-électrode et pendant une durée $t_2$ une tension en forme de rampe passant linéairement de cette tension Vce à une tension qui diffère de Vce d'une quantité Vc, la durée totale $t_1 + t_2$ de la tension Vcb étant égale à la durée $T_L$ de commande d'une ligne,

- des circuits de commande de colonnes (TR1, TR2, ... TRj) connectés entre ledit circuit (40) et chaque colonne ($C_1$, $C_2$, ..., $C_j$) et qui transmettent à chaque colonne ladite tension Vcb pendant une durée pouvant prendre une série de valeurs discrètes entre $t_1$, auquel cas on obtient un affichage noir, et $T_L$ auquel cas on obtient un affichage blanc, chaque valeur discrète intermédiaire entre $t_1$ et $T_L$ correspondant à un affichage de gris.

2. Ecran d'affichage selon la revendication 1, caractérisé par le fait que le circuit de commande de colonnes est constitué par P transistors (TR1, TR2, ... TRj) ayant une source reliée au circuit (40) délivrant la tension Vcb, un drain relié à l'une des P colonnes ($C_1$, $C_2$, ..., $C_j$) et une grille reliée à un circuit apte à délivrer une tension de commande d'ouverture du transistor pendant une durée qui est fonction du niveau de gris à afficher.

3. Ecran d'affichage selon la revendication 2, caractérisé par le fait que le circuit apte à délivrer une tension de commande d'ouverture des P transistors (TR1, TR2, ..., TRj) est constitué par P registres à décalage (SR1, SR2, ... SRj) de n cellules chacun, la première cellule de chaque registre étant reliée à la grille d'un des transistors (TR1, TR2, ..., TRj), un registre contenant n éléments binaires dont le premier est toujours égal à 1 et les suivants égaux à 0 ou à 1, l'ensemble de ces n éléments binaires caractérisant un niveau de gris, ces registres étant commandés par une horloge commune (42) de période $t_1$, qui commande le décalage des éléments binaires dans chaque registre, la durée $t_1$ étant telle que $nt_1$ soit égal à la durée totale $T_L$ de commande d'une ligne.

## Claims

1. Active matrix display screen comprising a first wall (10) on which are deposited a matrix of N by P electrodes (12) forming the first plates of capacitors, N addressing rows (14) and P addressing columns (16), NP control transistors (18) each having a drain (D), a gate (G) and a source (S), the drain (D) of each transistor being connected to the plate (12) of one of the capacitors, the source to one of the columns (16) and the gate (G) to one of the rows (14); a second wall (20) on which is deposited a counterelectrode (22) forming the second plate of the capacitors; a first row control circuit (30) able to successively apply the N rows (14) a voltage Ve able to make the transistors (18) of each row on for a time $T_L$, the control of the N rows constituting a frame of duration $Tr = NT_L$; a second control circuit (32) able to apply to the counterelectrode (22) a voltage Vce successively assuming two values, namely a value 0 and a value Vc, the voltage Vce passing from one to the other of these values, either following each frame, or following each row; and a third column control circuit (34) able to apply to the P columns for the entire control time of a row, a set of P voltages, said screen being characterized in that the third column control circuit (34) comprises a circuit (40) supplying a voltage Vcb having a pedestal of duration $t_1$ of value equal to the voltage Vce applied to the counterelectrode and for a duration $t_2$ a ramp-like voltage passing linearly from said voltage Vce to a voltage differing from Vce by a quantity Vc, the total duration $t_1 + t_2$ of the voltage Vcb being equal to the control time $T_L$ of a row; and column control circuits (TR1, TR2 ....TRj) connected between said circuit (40) and each column ($C_1$, $C_2$ ...Cj) and which transmit to each column said voltage Vcb for a time which can assume a series of discrete values between $t_1$, in which case a black display is obtained, and $T_L$ in which case a white display is obtained, each intermediate discrete value between $t_1$ and $T_L$ corresponding to a grey display.

2. Display screen according to claim 1, characterized in that the column control circuit is constituted by P transistors (TR1, TR2 ...TRj) having a source connected to the circuit (40) supplying the voltage Vcb, a drain connected to one of the R columns ($C_1$, $C_2$ ...$C_j$) and a gate connected to a circuit able to supply a voltage for controlling the opening of the transistor for a time which is a function of the grey level to be displayed.

3. Display screen according to claim 2, characterized in that the circuit able to supply a voltage for controlling the opening of P transistors (TR1, TR2 . . .TRj) is constituted by P shift registers (SR1, SR2 ...SRj) having n cells each, the first cell of each register being connected to the gate of one of the transistors (TR1, TR2 . ..TRj), one register containing n bits, whereof the first is always equal to 1 and the following bits to 0 or 1, all these n bits characterizing a grey level, said registers being controlled by a common clock (42) of period $t_1$, which controls the shift of the bits into each register, the duration $t_1$ being such that $nt_1$ is equal to the total row control duration $T_L$.

**Patentansprüche**

1. Anzeigeschirm mit aktiver Matrix mit:
   - einer ersten Wand (10), auf der angeordnet sind: eine Matrix aus N mal P Elektroden (12), die erste Kondensatorbeläge bilden, N Zeilen (14) und P Spalten (16) zur Adressierung, NP Steuertransistoren (18) mit jeweils einem Drain (D), einem Gate (G) und einer Source (S), wobei das Drain (D) jedes Transistors mit dem Belag (12) eines der Kondensatoren, die Source (S) mit einer der Spalten (16) und das Gate (G) mit einer der Zeilen (14) verbunden ist,
   - einer zweiten Wand (20), auf der eine Gegenelektrode (22) abgeschieden ist, die den zweiten Belag der Kondensatoren bildet,
   - einem ersten Steuerschaltkreis für Zeilen, der geeignet ist, sukzessive an die H Zeilen (14) eine Spannung Ve anzulegen, die geeignet ist, die Transistoren (18) jeder Zeile während einer Dauer $T_L$ leitend zu machen, wobei die Steuerung der N Zeilen ein Teilbild der Dauer $T_r = NT_L$ bildet,
   - einem zweiten Steuerschaltkreis (32), der geeignet ist, an der Gegenelektrode (22) eine Spannung Vce anzulegen, die sukzessive zwei Werte, einen Wert 0 und einen Wert Vc, annimmt, wobei die Spannung Vce von dem einem zu dem anderen der Werte entweder nach jedem Teilbild oder nach jeder Zeile geht, und
   - einem dritten Steuerschaltkreis (34) für Spalten, der geeignet ist, an die P Spalten während der gesamten Dauer der Ansteuerung einer Zeile eine Gruppe von P Spannung anzulegen, wobei der Schirm gekennzeichnet ist durch die Tatsache, daß der dritte Steuerschaltkreis (34) für Spalten um-faßt:
   - einen Schaltkreis (40), der eine Spannung Vcb erzeugt, die eine Treppe der Dauer $t_1$ mit einem Wert gleich der an die Gegenelektrode angelegten Spannung Vce und während einer Dauer $t_2$ eine Spannung in der Form einer Rampe bildet, die linear von dieser Spannung Vce zu einer Spannung geht, die sich von Vce um vc unterscheidet, wobei die

Gesamtdauer $t_1 + t_2$ der Spannung Vcb gleich der Dauer $T_L$ der Ansteuerung einer Zeile ist,
   - Steuerschaltkreise (TR1, TR2, ... , TRj) für Spalten, die zwischen dem Schaltkreis (40) und jeder Spalte ($c_1$, $c_2$, ... , $C_j$) angeschlossen sind und die zu jeder Spalte die Spannung Vcb während einer Dauer übertragen, die eine Reihe von diskreten Werten zwischen $t_1$, in welchem Fall man eine schwarze Anzeige erhält, und $T_L$, in welchem Fall man eine weiße Anzeige erhält, annehmen kann, wobei jeder diskrete Zwischenwert zwischen $t_1$ und $T_L$ einer grauen Anzeige entspricht.

2. Anzeigeschirm nach Anspruch 1, gekennzeichnet durch die Tatsache, daß der Steuerschaltkreis für Spalten aus P Transistoren (TRI, TR2, ... , TRj) mit einer Source, die mit dem die Spannung Vcb erzeugenden Schaltkreis (40) verbunden ist, mit einem Drain, das mit einer der P Spalten ($C_1$, $C_2$, ... , $C_j$) verbunden ist, und mit einem Gate, das mit einem Schaltkreis verbunden ist, der geeignet ist, eine Steuerspannung zum Öffnung des Transistors während einer Dauer, die eine Funktion des anzuzeigenden Grauwerts ist, zu erzeugen, besteht.

3. Anzeigeschirm nach Anspruch 2, gekennzeichnet durch die Tatsache, daß der Schaltkreis, der geeignet ist eine Steuerspannung zum Öffnen der P Transistoren (TR1, TR2, ... TRj) zu erzeugen, aus P Schieberegistern (SR1, SR2, ... SRj) aus jeweils n Zellen besteht, wobei die erste Zelle jedes Registers mit dem Gate eines der Transistoren (TR1, TR2, ... , TRj) verbunden ist, wobei ein Register n binäre Elemente enthält, wovon das erste immer gleich 1 ist und die folgenden gleich 0 oder gleich 1 sind, wobei die Anordnung dieser n binären Elemente einen Grauwert kennzeichnet, wobei diese Register von einer gemeinsamen Uhr (42) mit Periode $t_1$, die das Verschieben der binären Elemente in jedem Register steuert, gesteuert werden, wobei die Dauer $t_1$ derart ist, daß $nt_1$ gleich der Gesamtdauer $T_L$ der Ansteuerung einer Zeile ist.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14